## Europäisches Patentamt

## European Patent Office

## Office européen des brevets

(19)

(11) Numéro de publication: **0 010 501**
**B1**

(12) **FASCICULE DE BREVET EUROPEEN**

(45) Date de publication du fascicule de brevet: **09.12.81**

(51) Int. Cl.³: **F 16 K 49/00, F 01 L 3/18, F 01 L 3/20**

(21) Numéro de dépôt: **79400764.1**

(22) Date de dépôt: **18.10.79**

(54) Soupape, notamment pour moteurs à combustion interne, du type à champignon et refroidie par circulation forcée d'un fluide réfrigérant.

(30) Priorité: **25.10.78 FR 7830382**

(43) Date de publication de la demande:
**30.04.80 Bulletin 80/9**

(45) Mention de la délivrance du brevet:
**09.12.81 Bulletin 81/49**

(84) Etats Contractants Désignés:
**BE CH DE GB IT NL SE**

(56) Documents cités:
**FR - A - 1 418 078**
**FR - A - 1 572 676**
**FR - A - 2 221 659**
**FR - A - 2 329 848**

(73) Titulaire: **SOCIETE D'ETUDES DE MACHINES THERMIQUES S.E.M.T.**
**2, Quai de Seine**
**F-93202 Saint-Denis (FR)**

(72) Inventeur: **Coulin, Jean Paul**
**7, Place des Cerisiers**
**95160 Montmorency (FR)**

(74) Mandataire: **Weinstein, Zinovi et al,**
**Cabinet Z. WEINSTEIN 20, Avenue de Friedland**
**F-75008 Paris (FR)**

Courier Press, Leamington Spa, England.

Soupape, notamment pour moteurs à combustion interne, du type à champignon et refroidie par
circulation forcée d'un fluide réfrigérant

L'invention se rapporte aux soupapes, notamment pour moteur à combustion interne, du type à champignon refroidies par circulation forcée d'un fluide réfrigérant. L'invention concerne plus particulièrement des soupapes dont la tige comprend au moins deux canaux de refroidissement longitudinaux et dont la tête est pourvue d'un canal de refroidissement sensiblement périphérique et d'au moins deux canaux radiaux reliant les canaux longitudinaux et le canal périphérique.

Des soupapes connues de ce type se composent généralement de plusieurs parties, assemblées par vissage, soudure ou brasage. Dans une soupape connue, la tige constitue également la partie centrale de la tête, et autour de cette partie centrale est rapportée une pièce annulaire formant la partie périphérique externe de la tête de la soupape. Cette structure permet l'usinage des canaux sous forme de gorges dans les surfaces appropriées, soit dans l'une des parties à assembler, soit dans les deux. Après l'assemblage des deux parties, les canaux se trouvent enfermés à l'intérieur de la tête. Cette soupape a pour inconvénient que pour assurer une bonne rigidité et étanchéité, les portées coopérantes des parties à assembler doivent être usinées soigneusement et la soudure ou le brasage doit être contrôlé rigoureusement. La fabrication de cette soupape est donc difficile et par conséquent chère.

Pour une autre soupape connue, on fabrique la tige et la tête en une seule pièce en prévoyant un évidement circulaire dans la face plane de la tête, au centre de celle-ci. Ceci permet de pratiquer dans les surfaces exposées de l'évidement les canaux sous forme de gorges ouvertes. Ensuite, on insère dans l'évidement une pièce de forme appropriée que l'on fixe par soudure ou brasage. Cette réalisation possède les inconvénients décrits plus haut, et en plus, en raison de l'évidement important, on obtient une structure dont la dilatation thermique est incontrôlable.

Pour éviter un évidement important au centre de la tête, il est également connu de fabriquer la soupape en une seule pièce et d'usiner à partir de la face plane de la tête des gorges profondes qui, après être fermées par un cordon de soudure au niveau de la surface plane, forment les canaux intérieurs désirés. Mais, pour cette soupape aussi, puisque le cordon de soudure est long et se trouve au niveau de la surface plane de la tête, l'exécution de la soudure doit être soignée et le contrôle du cordon rigoureux, sans que le problème de la dilatation incontrôlée soit pour autant résolu puisque les gorges profondes constituent quand même un évidement relativement grand.

L'invention a pour objectif de proposer une soupape qui ne présente pas les inconvénients précités inhérents aux soupapes connues.

Pour éliminer ces inconvénients, la soupape selon l'invention, notamment pour moteurs à combustion interne, du type à champignon et refroidie par circulation forcée d'un fluide réfrigérant, dont la tige de soupape comprend au moins deux canaux de refroidissement longitudinaux et dont la tête de soupape est pourvue d'un canal de refroidissement sensiblement périphérique et s'étendant dans un plan sensiblement parallèle à la surface plane et inférieure de la tête de soupape et d'au moins deux canaux sensiblement radiaux reliant lesdits canaux longitudinaux et ledit canal périphérique, est caractérisée en ce que les canaux prévus dans la tête de soupape sont formés par des tronçons de canaux rectilignes s'étendant à partir de la périphérie de la tête de soupape en s'ouvrant vers l'extérieur, ledit canal périphérique ayant la forme d'un polygone, et en ce que lesdits canaux rectilignes sont obturés au niveau de leur ouverture vers l'extérieur.

Selon l'invention, les canaux radiaux peuvent s'étendre dans le plan du canal périphérique ou être inclinés par rapport à celui-ci.

Selon un mode de réalisation préféré, les canaux radiaux s'étendent à partir de la surface extérieure de la zone de la tête raccordée à la tige en arrondie dans le sens axial de la soupape, et traversent un canal longitudinal pour aller s'ouvrir dans le canal périphérique.

Selon d'autres caractéristiques de l'invention, les canaux radiaux peuvent partir de la surface périphérique cylindrique de la tête, et à chaque canal longitudinal peuvent être associés plusieurs canaux radiaux.

Selon l'invention, les canaux rectilignes dans la tête de soupape sont usinés par forage à partir de la surface extérieure de la tête de soupape.

Le fait que les canaux situés dans la tête sont constitués de tronçons de canaux rectilignes qui s'ouvrent vers l'extérieur permet, selon une caractéristique importante de l'invention, la fabrication de la soupape en une seule pièce monobloc.

L'invention sera mieux comprise, et d'autres buts, caractéristiques, détails et avantages de celle-ci apparaîtront plus clairement au cours de la description explicative qui va suivre faite en référence aux dessins schématiques annexés, donnés uniquement à titre d'exemple, illustrant plusieurs modes de réalisation de l'invention et dans lesquels:

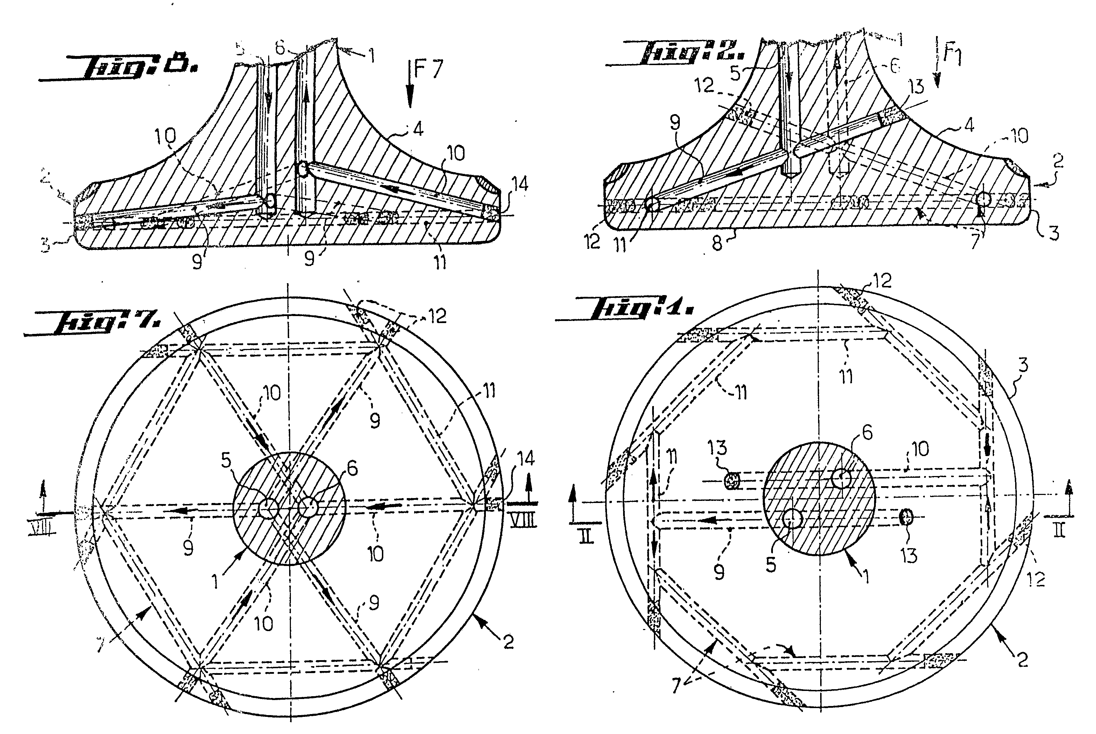

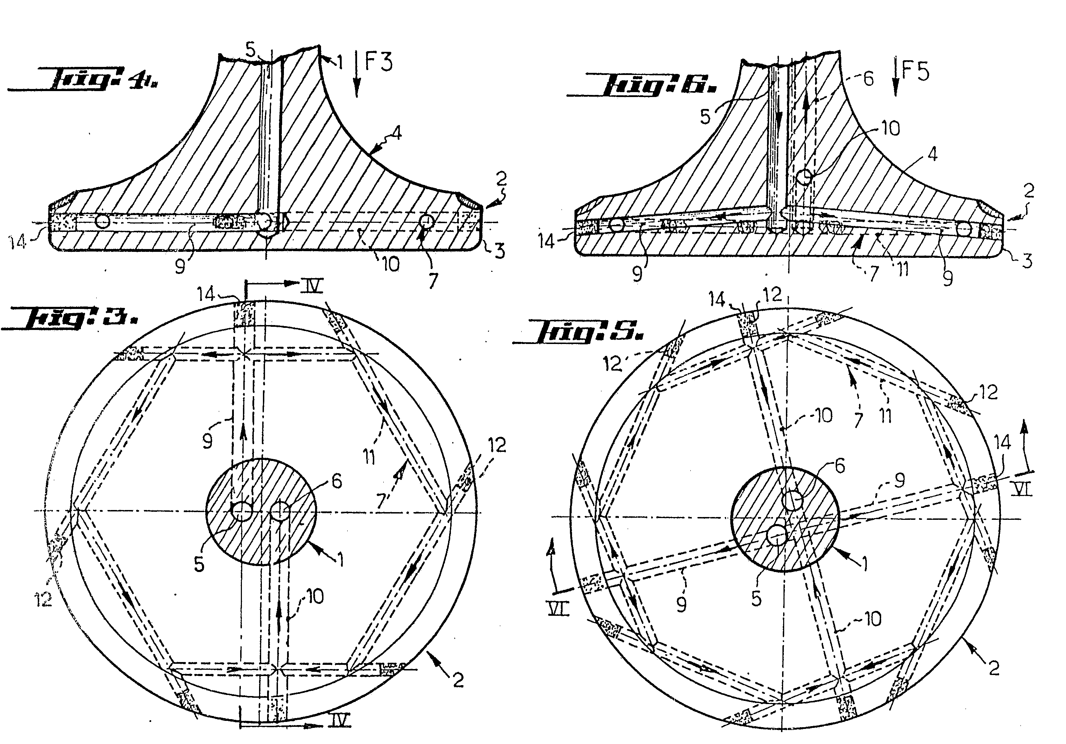

La figure 1 montre en une vue de dessus dans la direction de la flèche F1 de la figure 2 un mode de réalisation préféré de la soupape selon l'invention; la figure 2 est une vue en coupe du mode de réalisation préféré de l'invention, le long de la ligne II—II de la figure 1; la figure 3 montre un deuxième mode de réalisation de la soupape selon l'invention, en une vue de dessus dans le sens de la flèche F3 de la figure 4; la figure 4 est une vue en coupe le long de la ligne IV—IV de la figure 3; la figure 5 représente en une vue de dessus dans la direction de la flèche F5 de la figure 6 un troisième mode de réalisation de l'invention; la figure 6 est une vue en coupe le long de la ligne VI—VI de la figure 5; la figure 7 est une vue de dessus dans la direction de la flèche F7 de la figure 8 d'un quatrième mode de réalisation d'une soupape selon l'invention; la figure 8 est une vue en coupe le long de la ligne VIII—VIII de la figure 7.

Les différents modes de réalisation de la soupape proposée par l'invention, du type à champignon et refroidie par circulation forcée d'un fluide réfrigérant ont en commun que la soupape se compose d'une tige de soupape 1 et d'une tête de soupape 2. Cette dernière comprend une partie sensiblement cylindrique 3 et une partie 4 qui va vers la tige en se rétrécissant suivant un contour courbe dans le sens axial de la soupape. Etant donné que l'invention concerne la structure de la partie formant tête 2, la tige est arrachée sur les figures.

Mais il ressort néanmoins des figures que la tige 1 comprend deux canaux longitudinaux pour la circulation du fluide réfrigérant, un canal 5 pour l'amenée du fluide et un canal 6 pour le retour de celui-ci. Dans tous les modes de réalisation la tête 2 de soupape est pourvue d'un canal sensiblement périphérique 7, qui s'étend dans un plan sensiblement parallèle à la surface inférieure plane 8 de la tête de soupape. Le canal longitudinal 5 pour l'amenée de fluide réfrigérant est relié au canal 7 par au moins un canal radial d'amenée de fluide 9, et le canal longitudinal de retour de fluide 6 est relié par au moins un canal radial de retour 10 à ce canal 7.

Les figures illustrent bien que dans chaque mode de réalisation de l'invention le canal périphérique 7 est formé par une suite de tronçons de canal appartenant chacun à un canal rectiligne 11 qui s'étend à partir de la surface périphérique cylindrique 3 de la tête jusqu'au moins le canal 11 voisin, en suivant la direction d'une corde dans le plan circulaire de la tête. Chaque canal 11 s'ouvre par une extrémité vers l'extérieur et par l'autre dans le canal 11 adjacent. Le canal périphérique présente ainsi la forme géométrique d'un polygone.

Chaque canal radial 9, 10 est formé par un tronçon d'un canal rectiligne qui s'étend à partir de la surface extérieure ou périphérique de la tête en s'ouvrant vers l'extérieur et relie un canal longitudinal 5 ou 6 au canal 7.

Tous les canaux rectilignes 9, 10, 11 sont obturés au niveau de leur ouverture vers l'extérieur par tout moyen d'obturation étanche approprié, tel que par exemple des bouchons 12 vissés ou emmanchés dans les extrémités de canal adjacents à la surface extérieure de la tête et fixés par soudure, brasage, collage ou analogue.

Les canaux rectilignes 9, 10, 11 peuvent être pratiqués dans la tête par tout moyen approprié. Ils peuvent être obtenus par forage à partir de la surface extérieure de la tête.

Il ressort de ce qui précède que la soupape selon l'invention, grâce à la réalisation particulière des canaux situés dans la tête, peut être fabriquée en une seule pièce monobloc. Cependant, l'invention n'impose pas la fabrication en une pièce de la soupape.

Après avoir décrit les caractéristiques fondamentales de l'invention, communes à tous les modes de réalisation, on exposera ci-après les particularités de chaque mode de réalisation. Les différences entre ces modes de réalisation résident notamment dans le nombre et la disposition des canaux radiaux 9 et 10 et dans le nombre des tronçons rectilignes 11 formant le canal polygonal 7.

Les figures 1 et 2 représentent le mode de réalisation préféré. Le canal 7 se compose de huit tronçons de canal rectiligne 11. Chaque canal longitudinal 5, 6 communique avec le canal 7 par un seul canal sensiblement radial 9, 10. Comme le montre clairement la figure 2, chaque canal radial 9, 10 s'ouvre vers l'extérieur à un endroit 13 situé dans la partie de tête 4 à contour courbe dans le sens axial de la soupape. Ainsi le canal radial d'amenée de fluide 9 part de cet endroit 13 de la surface extérieure de la tête, traverse le canal longitudinal d'amenée de fluide 5 pour aller déboucher dans le tronçon 11 du canal 7 qui se trouve sensiblement diamètralement opposé à l'endroit d'ouverture vers l'extérieur 13. Il ressort de la figure 2 que les canaux radiaux 9, 10 sont inclinés par rapport au plan du canal 7. Les canaux 9, 10 sont situés dans des plans parallèles.

Ce mode de réalisation est avantageux parce qu'il assure une disposition symétrique des canaux dans la tête, ce qui permet de bien contrôler les déformations thermiques.

Dans le mode de réalisation illustré sur les figures 3 et 4, deux canaux radiaux 9, 10, pour l'amenée et le retour du fluide respectivement, sont prévus. Les deux canaux sont situés dans le plan du canal 7. L'ouverture vers l'extérieur 14 de chaque canal radial 9, 10 se trouve par conséquent dans la surface périphérique cylindrique 3 de la tête. Chaque canal radial 9, 10 s'étend à partir de la périphérie de la tête jusqu'à son canal longitudinal associé, en traversant sensiblement perpendiculairement un tronçon rectiligne 11 du canal 7. Les deux canaux radiaux 9, 10 sont orientés, depuis leur canal longitudinal 5, 6 respectivement dans des directions radiales opposées. Les axes des deux canaux radiaux sont parallèles l'un à l'autre.

Les figures 5 et 6 illustrent un troisième mode de réalisation qui est approprié aux soupapes de grand diamètre et aux moteurs à régime thermique élevé. Dans ce mode de réalisation, deux canaux radiaux 9 sont prévus pour relier le canal longitudinal d'amenée de fluide 5 au canal 7, et deux canaux radiaux de retour 10 sont prévus pour établir la communication entre le canal 7 et le canal longitudinal de retour 6. Il est avantageux mais pas obligatoire que les deux canaux radiaux 9 ou 10 soient situés dans un même plan vertical, respectivement de part et d'autre de leur canal longitudinal 5 ou 6, le plan vertical contenant également l'axe du canal longitudinal correspondant. Les deux plans précités se coupent de préférence sous un angle approximativement droit, comme cela est illustré sur la figure 5.

Comme tous les canaux radiaux s'ouvrent vers l'extérieur à des endroits 14 situés dans la surface extérieure cylindrique 3 de la tête, comme cela est illustré par les figures 5 et 6, cette disposition en croix des deux paires de canaux radiaux impose qu'au moins une paire de canaux présente une plus grande inclinaison angulaire par rapport au plan du canal 7 que l'autre paire. Sur les figures, les canaux radiaux les plus inclinés sont les canaux de retour 10. Les canaux radiaux d'amenée de fluide 9 sont également inclinés par rapport au plan du canal 7, mais il serait également possible de les situer dans ce plan.

Les figures 7 et 8 montrent un quatrième mode de réalisation, dans lequel chaque canal longitudinal 5, 6 est pourvu de trois canaux sensiblement radiaux 9, 10 répartis autour du canal longitudinal en délimitant des angles sensiblement égaux deux à deux. Tous les canaux radiaux s'ouvrent en 14 vers l'extérieur au niveau de la surface extérieure périphérique 3 de la tête. Selon la figure 7, le canal 7 est formé par six tronçons rectilignes 11 et chaque canal radial 9, 10 traverse le canal 7 à l'endroit de rencontre de deux tronçons de canal rectiligne, donc au niveau d'un coin du polygone.

Il ressort de la figure 8, que les ouvertures, vers leur canal longitudinal correspondant, des deux jeux de trois canaux sont décalées en hauteur dans l'axe de la soupape, si bien que l'inclinaison par rapport au plan du canal 7 des canaux radiaux d'un jeu de canaux est différent de celle de l'autre. Selon les figures, les canaux à plus forte inclinaison angulaire sont les canaux radiaux de retour de fluide 10. Les canaux radiaux d'arrivée 9 présentent également une inclinaison par rapport au plan du canal annulaire, mais il pourrait être envisagé de les placer dans ce plan même.

Dans tous les modes de réalisation de l'invention, l'efficacité du refroidissement est améliorée par un choix approprié des sections transversales des canaux.

A cet effet, le volume libre des canaux longitudinaux, des canaux radiaux et du canal périphérique polygonal est entièrement rempli par le fluide réfrigérant à circulation forcée. La section transversale de chaque canal longitudinal, radial ou périphérique est adaptée au débit traversant ce canal. Le vitesse d'écoulement du fluide réfrigérant est uniforme dans tout le système de canaux. Pour réaliser cette condition favorable, il convient notamment de choisir les sections transversales des canaux de telle sorte qu'à chaque endroit du système de canaux la surface totale d'écoulement ait la même valeur.

Par exemple, pour le mode de réalisation selon les figures 5 et 6, qui prévoit deux canaux radiaux d'arrivée de fluide et deux canaux radiaux de retour, cette condition d'écoulement uniforme peut être remplie ainsi: en supposant que tous les canaux ont des sections transversales circulaires et que le diamètre des canaux longitudinaux soit D, chaque canal radial doit laisser passer la moitié du débit d'un canal longitudinal. Chaque canal radial doit donc avoir un diamètre égal à $D/\sqrt{2}$. L'écoulement du fluide passant à travers un canal radial se partageant à l'arrivée dans le canal périphérique en deux écoulements partiels égaux et orientés dans des directions opposées, le diamètre des tronçons rectilignes du canal polygonal doit être égale à $D/2$.

Les mode de réalisation qui viennent d'être décrits n'ont été donnés qu'à titre d'exemple et de nombreuses modifications peuvent être apportées à ceux-ci. Ainsi, le nombre des canaux qui forment le canal polygonal et celui des canaux radiaux pourraient être différents. L'inclinaison des canaux radiaux par exemple d'amenée et/ou de retour de fluide, au lieu d'avoir la même inclinaison par rapport au plan du canal annulaire pourrait avoir des angles d'inclinaison différents. Il est en outre possible de donner une inclinaison plus forte aux canaux radiaux d'amenée de fluide qu'aux canaux radiaux de retour.

L'invention n'est donc nullement limitée aux modes de réalisation décrits et représentés. En particulier, elle comprend tous les moyens constituant des équivalents techniques des moyens décrits ainsi que leurs combinaisons, si celles-ci sont exécutées suivant son esprit et mises en oeuvre dans le cadre des revendications qui suivent.

**Revendications**

1. Soupape, notamment pour moteur à combustion interne, du type à champignon et refroidie par circulation forcée d'un fluide réfrigérant, la tige de soupape (1) comprenant au moins deux canaux de refroidissement longitudinaux (5,6) et la tête de soupape (2) étant pourvue d'un canal (7) de refroidissement sensiblement périphérique et s'étendant dans un plan sensiblement parallèle à la surface plane inférieure (8) de la tête de soupape (2) et d'au moins deux canaux (9,10) sensiblement radiaux reliant lesdits canaux longitudinaux (5,6) et ledit canal périphérique (7), caractérisée en ce que les canaux (7,9,10) prévus dans ladite tête de soupape (2) sont formés par des tronçons de canaux rectilignes (11) qui s'étendent à partir de la périphérie (3) de la tête de soupape (2) et s'ouvrent vers l'extérieur, ledit canal périphérique (7) ayant la forme d'un polygone, et en ce que lesdits canaux rectilignes (11) sont obturés au niveau de leur ouverture vers l'extérieur.

2. Soupape selon la revendication 1, caractérisée en ce que les canaux (7,9,10) précités s'étendant à partir de la périphérie (3) de la tête de soupape (2) sont obturés par des bouchons (12) fixés dans les extrémités s'ouvrant vers l'extérieur des canaux rectilignes (11) précités de toute manière appropriée, tel que par vissage ou emmanchement et soudure, brasage, collage.

3. Soupape selon l'une des revendications 1 ou 2, caractérisée en ce que les canaux radiaux (9,10) précités s'étendent sensiblement dans le plan du canal (7) polygonal précité.

4. Soupape selon l'une des revendications 1 ou 2, caractérisée en ce que les canaux radiaux (9,10) précités sont inclinés par rapport au plan du canal polygonal (7) précité et s'étendent à partir de la surface extérieure cylindrique (3) de la tête de soupape (2).

5. Soupape selon l'une des revendications 1 ou 2, caractérisée en ce que les canaux radiaux (9,10) précités s'étendent à partir de la surface extérieure de la zone (4) de la tête de la soupape (2), qui présente un profil courbe dans le sens de l'axe de la soupape et relie la partie cylindrique (3) de cette dernière à la tige (1) de la soupape, et traversent un canal longitudinal (5,6) précité pour aller s'ouvrir dans le canal polygonal (7) précité.

6. Soupape selon l'une des revendications précédentes, caractérisée en ce qu'un seul canal radial (9,10) précité est associé à chaque canal longitudinal (5,6) précité.

7. Soupape selon l'une des revendications 1 à 4, caractérisée en ce que deux canaux radiaux (9,10) précités sont associés à chaque canal longitudinal (5,6), et s'étendent depuis ledit canal longitudinal (5,6) dans des directions diamètralement opposées, en ce que la ligne de projection sur le plan du canal polygonal (7) précité d'une paire desdits canaux radiaux (9) associés à un canal longitudinal (5) croise ladite ligne de projection de l'autre paire de canaux radiaux (10) associés à l'autre canal longitudinal (6), et en ce que les inclinaisons angulaires, par rapport au plan dudit canal polygonal (7), desdites paires des canaux radiaux (9,10) sont différentes l'une de l'autre.

8. Soupape selon l'une des revendications 1, 2 ou 4, caractérisée en ce que trois canaux radiaux (9,10) précités sont associés à chaque canal longitudinal (5,6) précité, et répartis autour de ce dernier de façon sensiblement régulière, et en ce que les inclinaisons angulaires, par rapport au plan du canal polygonal (7) précité, des canaux radiaux (9) associés à un canal longitudinal (5) sont différentes de celles des canaux radiaux (10) associés à l'autre canal longitudinal (6).

9. Soupape selon la revendication 8, caractérisée en ce que le canal polygonal (7) précité a la forme géométrique d'un hexagone et chaque canal radial (9,10) précité débouche dans ledit canal polygonal (7) au niveau d'un coin dudit hexagone.

10. Soupape selon l'une des revendications précédentes, caractérisée en ce qu'au moins la partie formant la tête de ladite soupape (2) est réalisée en une seule pièce monobloc.

11. Soupape selon l'une des revendications précédentes, caractérisée en ce que la soupape entière est réalisée en une seule pièce monobloc.

12. Soupape selon l'une des revendications précédentes, caractérisée en ce que les canaux rectilignes (7,9,10) précités, situés dans la tête de la soupape, sont usinés par forage à partir de la surface extérieure de la tête de soupape (2).

13. Soupape selon l'une des revendications précédentes, caractérisée en ce que le volume libre des canaux longitudinaux (5,6) précités, des canaux radiaux (9,10) précités et du canal périphérique polygonal (7) précite est entièrement rempli par le fluide réfrigérant en circulation forcée.

14. Soupape selon la revendication 13, caractérisée en ce que la section transversale de chaque canal longitudinal (5,6), radial (9,10) ou périphérique (7) est adaptée au débit traversant ce canal, la vitesse d'écoulement du fluide réfrigérant étant uniforme depuis l'entrée jusqu'à la sortie.

15. Soupape selon la revendication 14, caractérisé en ce que la somme des aires des sections transversales des canaux radiaux (9,10), précités associés à un canal longitudinal (5,6) est égale à l'aire de la section transversale de ce dernier, et est égale à l'aire totale des sections transversales du canal polygonal (7) précité, à travers laquelle s'écoule le fluide réfrigérant dans le sens d'amenée du fluide ou de retour de fluide.

**Claims**

1. A valve, notably for an internal combustion engine, of the mushroom type cooled by forced circulation of a cooling fluid, the valve rod (1) comprising at least two longitudinal cooling ducts (5, 6) and the valve head (2) being provided with a substantially peripheral cooling duct (7) extending in a plane substantially parallel with the lower flat surface (8) of the valve head (2) and with at least two substantially radial ducts (9, 10) interconnecting the said longitudinal ducts (5, 6) and the said peripheral duct (7), characterized in that the ducts (7, 9, 10) provided in the said valve head (2) are constituted by rectilinear duct portions (11) which extend from the periphery of the valve head (2) and open outwardly, the said peripheral duct (7) having the shape of a polygon, and in that the said rectilinear ducts (11) are obturated at their outward opening.

2. A valve according to claim 1, characterized in that the said ducts (7, 9, 10) extending from the periphery (3) of the valve head (2) are obturated by plugs (12) secured in the outwardly opening ends of the aforesaid rectilinear ducts (11) in any suitable manner, as by screwing or tight-fit insertion and welding, brazing, sticking.

3. A valve according to one of claims 1 or 2, characterized in that the aforesaid radial ducts (9, 10) extend substantially in the plane of the aforesaid polygonal duct (7).

4. A valve according to one of claims 1 or 2, characterized in that the aforesaid radial ducts (9, 10) are inclinded with respect to the plane of the aforesaid polygonal duct (7) and extend from the external cylindrical surface (3) of the valve head (2).

5. A valve according to one of claims 1 or 2, characterized in that the aforesaid radial ducts (9, 10) extend from the external surface of the region (4) of the valve head (2) which has a profile curved towards the axis of the valve and connects the cylindrical portion (3) of the latter to the rod (1) of the valve, and traverse an aforesaid longitudinal duct (5, 6) to open into the aforesaid polygonal duct (7).

6. A valve according to one of the foregoing claims, characterized in that a single aforesaid radial duct (9, 10) is associated with each aforesaid longitudinal duct (5, 6).

7. A valve according to one of claims 1 to 4, characterized in that two aforesaid radial ducts (9, 10) are associated with each longitudinal duct (5, 6) and extend from the said longitudinal duct (5, 6) in diametrically opposed directions, and in that the line of projection on the plane of the aforesaid polygonal duct (7) of a pair of said radial ducts (9) associated with a longitudinal duct (7) crosses the said line of projection of the other pair of radial ducts (10) associated with the other longitudinal duct (6), and in that the angular inclinations, with respect to the plane of the said polygonal duct (7) of the said pairs of radial ducts (9, 10) are different from one another.

8. A valve according to one of claims 1, 2 or 4, characterized in that three aforesaid radial ducts (9, 10) are associated with each aforesaid longitudinal duct (5, 6), and substantially uniformly distributed around the latter, and in that the angular inclinations, with respect to the plane of the aforesaid polygonal duct (7), of the radial ducts (9) associated with a longitudinal duct (5) are different from those of the radial ducts (10) associated with the other longitudinal duct (6).

9. A valve according to claim 8, characterized in that the aforesaid polygonal duct (7) has the geometrical shape of a hexagon and each aforesaid radial duct (9, 10) opens into the said polygonal duct (7) in the region of a corner of the said hexagon.

10. A valve according to one of the foregoing claims, characterized in that at least the portion constituting the head (2) of the said valve is made in one piece.

11. A valve according to one of the foregoing claims, characterized in that the whole valve is made in a single piece.

12. A valve according to one of the foregoing claims, characterized in that the aforesaid rectilinear ducts (7, 9, 10) located in the valve head are obtained by drilling the valve head (2) starting from its external surface.

13. A valve according to one of the foregoing claims, characterized in that the free volume of the aforesaid longitudinal ducts (5, 6), the aforesaid radial ducts (9, 10) and the aforesaid polygonal peripheral duct (7) is completely filled by the cooling fluid in forced circulation.

14. A valve according to claim 13, characterized in that the cross-section of each longitudinal duct (5, 6), radial duct (9, 10) or peripheral duct (7) is adapted to the rate of flow through the said duct, the flow velocity of the cooling fluid being uniform from the inlet to the outlet.

15. A valve according to claim 14, characterized in that the sum of the cross-section areas of the aforesaid radial ducts (9, 10) associated with a longitudinal duct (5, 6) is equal to the cross-section area of the latter, and is equal to the total area of the cross-sections of the aforesaid polygonal duct (7) through which the cooling fluid flows in the fluid feed or the fluid return direction.

**Patentansprüche**

1. Tellerventil insbesondere für Brennkraftmaschine welches durch Zwangsdurchlauf eines Kühlmittels gekühlt wird und dessen Ventilschaft (1) wenigstens zwei in Längsrichtung angeordnete Kühlungskanäle (5, 6) aufweist, wobei der Ventilkopf (2) einen im wesentlichen in Umfangsrichtung verlaufenden Kühlkanal (7) aufweist, der sich in einer zur unteren Fläche (8) des Ventilkopfes (2) parallelen Ebene erstreckt, und wenigstens zwei im wesentlichen radial gerichtete Kanäle (9, 10), welche die Längskanäle (5, 6) mit dem Umfangskanal (7) verbinden, dadurch gekennzeichnet, dass die in dem Ventilkopf (2) vorgesehenen Kanäle (7, 9, 10) durch geradlinige, sich von dem Umfang (3) des Ventilkopfes (2) erstreckende, sich nach aussen öffnende Kanalabschnitte (11) gebildet werden, wobei der Umfangskanal (7) die Form eines Vielecks hat und wobei die geradlinigen Kanäle (11) an deren Offnungen nach aussen verschlossen sind.

2. Ventil nach Anspruch 1, dadurch gekennzeichnet, dass die von dem Umfang (3) des Ventilkopfes (2) verlaufenden Kanäle (7, 9, 10) durch an den sich nach aussen öffnenden Enden der geradlinigen Kanäle (11) in jeder geeigneten Art, wie Verschraubung oder Einsteckung und Verschweissung, Löten, Kleben, befestigte Stöpsel (12), verschlossen sind.

3. Ventil nach Anspruch 1 oder 2, dadurch gekennzeichnet, dass die radial gerichteten Kanäle (9, 10) sich im wesentlichen in der Ebene des mehreckigen Kanals (7) erstrecken.

4. Ventil nach Anspruch 1 oder 2, dadurch gekennzeichnet, dass die radial gerichteten Kanäle (9, 10) zu der Ebene des mehreckigen Kanals (7) geneigt sind und sich von der äusseren zylindrischen Fläche (3) her des Ventilkopfes (2) erstrecken.

5. Ventil nach Anspruch 1 oder 2, dadurch gekennzeichnet, dass die radial gerichteten Kanäle (9, 10) sich von der Aussenfläche desjenigen Bereichs (4) des Ventilkopfes (2) erstrecken, welcher ein krummes Profil in Axialrichtung des Ventiles aufweist und den zylindrischen Teil (3) des letzteren mit dem Ventilschaft (1) verbindet, wobei die radial gerichteten Kanäle einen Längskanal (5, 6) durchsetzen, um sich in den vieleckigen Kanal (3) zu öffnen.

6. Ventil nach einem der vorangehenden Ansprüche, dadurch gekennzeichnet, dass ein einziger radial gerichteter Kanal (9, 10) jedem Längskanal (5, 6) zugeordnet ist.

7. Ventil nach einem der Ansprüche 1 bis 4, dadurch gekennzeichnet, dass zwei radial gerichtete Kanäle (9, 10) jedem Längskanal (5, 6) zugeordnet sind und sich von diesem Längskanal (5, 6) ab in diametral entgegengesetzten Richtungen erstrecken, dass die Projektionslinie, auf die Ebene des mehreckigen Kanals (7), eines Paares der einem Längskanal (5) zugeordneten radial gerichteten Kanäle (9) die Projektionslinie des anderen Paares von dem anderen Längskanal (6) zugeordneten radial gerichteten Kanäle (10) kreuzt, und dass die Winkelneigungen der Paare von radial gerichteten Kanälen (9, 10) in Bezug auf die Ebene des mehreckigen Kanals (7) untereinander verschieden sind.

8. Ventil nach einem der Ansprüche 1, 2 oder 4, dadurch gekennzeichnet, dass drei radial gerichtete Kanäle (9, 10) jedem Längskanal (5, 6) zugeordnet und um diesen herum im wesentlichen gleichmässig verteilt sind, und die Winkelneigungen der einem Längskanal (5) zugeordneten radial gerichteten Kanäle (9) in Bezug auf die Ebene des mehreckigen Kanals (7) sich von denjenigen der dem anderen Längskanal (6) zugeordneten radial gerichteten Kanäle (10) unterscheiden.

9. Ventil nach Anspruch 8, dadurch gekennzeichnet, dass der vieleckige Kanal (3) die geometrische Gestaltung eines Sechsecks hat und dass jeder radial gerichtete Kanal (9, 10) in den vieleckigen Kanal (7) an einer Ecke des Sechsecks mündet.

10. Ventil nach einem der vorangehenden Ansprüche, dadurch gekennzeichnet, dass mindestens derjenige Teil, der den Ventilkopf (2) bildet, einstückig ausgebildet ist.

11. Ventil nach einem der vorangehenden Ansprüche, dadurch gekennzeichnet, dass das ganze Ventil einstückig ausgebildet ist.

12. Ventil nach einem der vorangehenden Ansprüche, dadurch gekennzeichnet, dass die sich im Ventilkopf befindenden geradlinigen Kanäle (7, 9, 10) durch Bohrung von der Aussenfläche her des Ventilkopfes (2) gebildet werden.

13. Ventil nach einem der vorangehenden Ansprüche, dadurch gekennzeichnet, dass der freie Innenraum der Längskanäle (5, 6), der radial gerichteten Kanäle (9, 10) und des mehreckigen Umfangskanals (7) vollständig mit dem im Zwangskreislauf fliessenden Kühlmittel gefüllt ist.

14. Ventil nach Anspruch 13, dadurch gekennzeichnet, dass der Querschnitt jedes Längskanals (5, 6), jedes radial gerichteten Kanals (9, 10) oder des Umfangskanals (7) an den diesen Kanal durchströmenden Durchsatz angepasst ist, wobei die Strömungsgeschwindigkeit des Kühlmittels vom Eingang bis zum Ausgang gleichmässig ist.

15. Ventil nach Anspruch 14, dadurch gekennzeichnet, dass die Summe der Flächeninhalte der Querschnitte der einem Längskanal (5, 6) zugeordneten radial gerichteten Kanäle (9, 10) gleich dem Flächeninhalt des Querschnitts des Längskanals ist und dem Gesamtflächeninhalt der Querschnitte des mehreckigen Kanals (7) gleich ist, welcher Gesamtflächeninhalt durch das Kühlmittel in Zuflussbzw. Rückflussrichtung desselben durchströmt wird.

0 010 501

Fig. 1.

Fig. 2.

Fig. 6.

Fig. 7.

Fig. 3.

Fig. 4.

Fig. 5.

Fig. 6.